# FASCICULE DE BREVET EUROPEEN

(11) **EP 1 264 661 B1**
(45) Date de publication et mention de la délivrance du brevet: **02.02.2005**
(21) Numéro de dépôt: 02291356.0
(22) Date de dépôt: 04.06.2002
(51) Int. Cl.: B24B 5/22, B24B 55/06, G21C 21/02

(54) **Procédé et dispositif de rectification d'objets cylindriques, notamment de pastilles de combustible nucléaire**
Verfahren und Vorrichtung zum Schleifen von zylindrischen Stücken, insbesondere Kernbrennstoff-Pellets
Method and apparatus for grinding cylindric workpieces, in particular nuclear fuel pellets

(30) Priorité: 05.06.2001 FR 0107300
(43) Date de publication de la demande: 11.12.2002
(73) Titulaire: COMPAGNIE GENERALE DES MATIERES NUCLEAIRES, 78140 Velizy Villacoublay (FR)
(72) Inventeur: Engelvin, Pascal, 78000 Versailles (FR); Marchand, Michel, 78330 Fonteney-Le-Fleury (FR); Masson, Serge, 84000 Avignon (FR)
(74) Mandataire: Le Roux, Martine

(56) Documents cités:
- FR-A- 2 088 366
- US-A- 4 004 378
- PATENT ABSTRACTS OF JAPAN vol. 2000, no. 24, 11 mai 2001 (2001-05-11) -& JP 2001 205563 A (JAPAN NUCLEAR CYCLE DEVELOPMENT INST STATES OF PROJECTS;FUJI ELECTRIC), 31 juillet 2001 (2001-07-31)

## Description

La présente invention concerne un procédé de rectification (d'ajustement dimensionnel) d'objets cylindriques, selon le préambule de la revendication 1, notamment de pastilles de combustible nucléaire, et un dispositif de rectification de tels objets, selon le préambule de la revendication 9. Le document FR 2 088 366 A décrit des procédé et dispositif de ce type.

Ladite invention est plus particulièrement positionnée et décrite ci-après dans le contexte de la rectification de pastilles de combustible nucléaire mais elle n'est nullement limitée audit contexte. L'homme du métier comprendra aisément qu'elle convient dans tout contexte de rectification (d'ajustement dimensionnel) de pièces de révolution cylindriques, notamment de pièces métalliques et de céramiques.

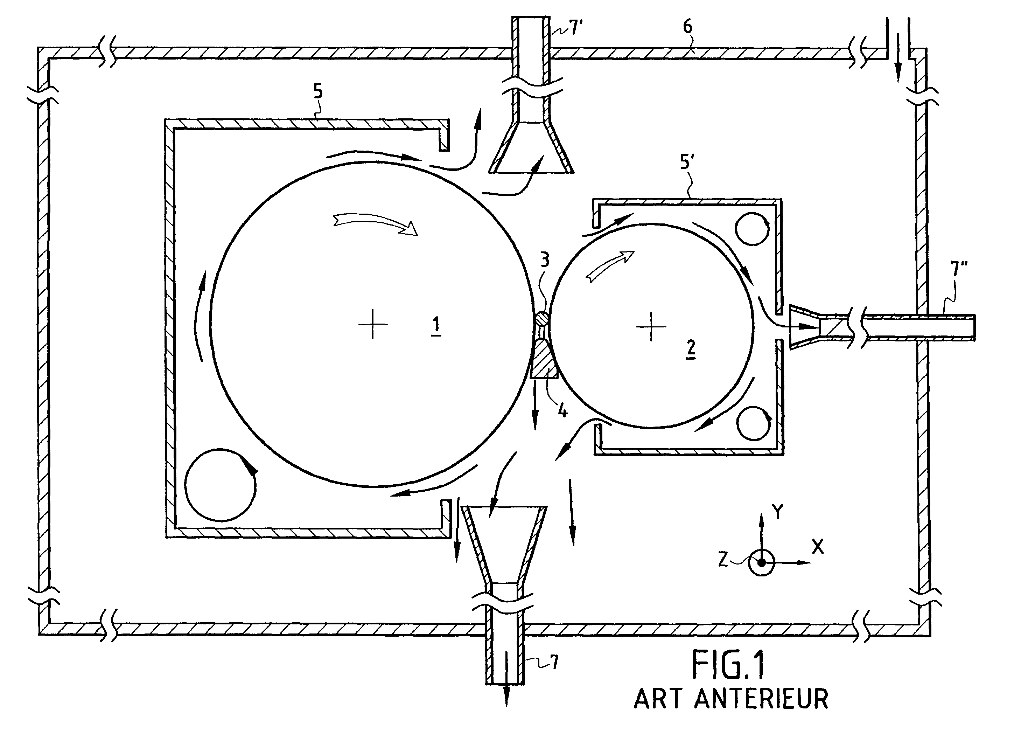

Dans ledit contexte de la rectification de pastilles de combustible nucléaire, on procède à ce jour comme précisé ci-après, en référence à la figure 1. Cet exposé de l'art antérieur est développé en référence à ladite figure 1 pour en faciliter la compréhension et pour faciliter de la même façon l'exposé et la compréhension ultérieure de l'invention, invention qui s'analyse comme un perfectionnement à cet art antérieur.

Dans le processus de fabrication du combustible nucléaire, les pastilles obtenues à l'issue du pressage des poudres (PuO₂ + UO₂ ou UO₂, généralement) subissent, pendant l'opération de frittage qui s'effectue à haute température (aux environs de 1 700°C), un retrait non maitrisé.

Il est donc nécessaire de les faire passer dans une rectifieuse pour obtenir leur ajustement dimensionnel très précis, avant de les regrouper dans des gaines pour former des crayons.

La rectifieuse utilisée par la Demanderesse à ce jour se compose principalement de deux meules 1 et 2, qui sont mises en rotation dans le même sens :
- une meule de travail 1, qui est à base de poudre abrasive liée par un liant métallique ou organique ;
- une meule d'entraînement 2, qui est également à base de poudre abrasive liée par un liant métallique ou organique.

Les pastilles cylindriques à rectifier 3 sont acheminées, en position couchée, par glissement sur une goulotte horizontale. La rectification se fait par l'action abrasive de la meule de travail 1 sur lesdites pastilles 3, guidées l'une après l'autre, sur une réglette d'enfilade 4 sur toute la largeur de ladite meule de travail 1. Lesdites pastilles 3 tournent sous l'action de la meule de travail 1 et sont translatées (selon l'axe Oz) sous l'action de la meule d'entraînement 2. L'action abrasive de la meule de travail 1 est ainsi parfaitement répartie sur toute la périphérie (surface externe) desdites pastilles 3. La direction de la translation (selon l'axe Oz) est fixée par une inclinaison adéquate de la meule d'entraînement 2.

La rotation desdites deux meules de travail 1 et d'entraînement 2 se fait dans un sens tel que ladite meule de travail 1 développe son action abrasive sur les pastilles 3 du haut vers le bas. Les poussières de rectification sont ainsi plutôt générées vers le bas et l'on tire alors meilleur avantage de l'''effet de peau" dû à la rotation de ladite meule de travail 1.

Le tout est confiné dans une boite à gants 6. Le confinement en cause est un confinement statique et dynamique.

Les poussières de rectification sont aspirées par des buses d'aspiration 7, 7' et 7" :
- une première buse 7 est positionnée en partie inférieure, sous la réglette d'enfilade 4, légèrement décalée du côté de la meule de travail 1 ;
- une seconde buse 7' est positionnée en partie supérieure, à la verticale de ladite réglette d'enfilade 4 ;
- une troisième buse 7" est prévue pour aspirer directement dans le carter de protection 5' de la meule d'entraînement 2.

Les carters de protection 5 et 5', prévus d'origine autour des meules 1 et 2, ont une forme de parallélépipèdes rectangles, dont les faces sont plus ou moins éloignées de la surface desdites meules et forment entre elles des angles, à l'intérieur desquels les poussières ont tendance à s'accumuler. Lesdits carters 5 et 5' assurent un confinement, statique et dynamique, imparfait. Une fraction importante des poussières générées est éjectée, hors desdits carters 5 et 5' et pollue la boite à gants 6, dans la mesure où elle n'est pas en totalité reprise par les buses d'aspiration 7, 7' et 7".

Ces inconvénients obligent à prévoir une aspiration puissante et donc à surdimensionner le dispositif d'aspiration de poussières et celui de traitement des effluents gazeux de la boite à gants.

On a également observé que certaines parois desdits carters 5 et 5' pouvaient jouer le rôle de "filtre-à-chocs" ; *i.e.* qu'elles se contaminaient par incrustation en leur sein de poussières projetées. Leur décontamination est quasi impossible ...

C'est donc, dans un tel contexte, en référence au problème technique de la gestion des poussières générées, que la Demanderesse propose des procédé et dispositif de rectification améliorés. Elle a souhaité minimiser la pollution générée sans imposer de contraintes excessives sur l'aspiration.

Le procédé de l'invention est un procédé de rectification d'objets cylindriques selon la revendication 1. Selon ledit procédé :
- les objets sont translatées en continu, sous l'action d'une meule d'entraînement, sur toute la largeur de ladite meule de travail, ceci sur une réglette d'enfilade positionnée entre lesdites meules de travail et d'entraînement ;
- lesdites meules de travail et d'entraînement sont mises en rotation dans le même sens, sens qui détermine une action de ladite meule de travail sur lesdits objets dirigée du haut vers le bas ;
- on opère dans un dispositif de protection ouvert (sous confinement statique et dynamique), avec aspiration des poussières de rectification générées;
- les poussières de rectification générées sont confinées, de façon statique et dynamique, au plus près de la surface desdites meules de travail et d'entraînement;
- lesdites poussières de rectification, générées et confinées côté meule de travail et côté meule d'entraînement sont, dans leur quasi totalité, entraînées vers le bas de ladite meule de travail, dans un courant gazeux, provoqué d'une part par la rotation de ladite meule de travail et d'autre part par la mise en oeuvre d'une aspiration forcée ;
- lesdites poussières de rectification, générées, confinées et entraînées sont prélevées grâce à ladite aspiration forcée.

De façon caractéristique, dans le cadre dudit procédé, on met en oeuvre un confinement statique et dynamique, de proximité, de sorte que le piégeage des poussières produites par la rectification se réalise avec un rendement optimal de récupération (on minimise ainsi toute pollution) et un débit d'aspiration minimal (on limite ainsi la puissance du compresseur nécessaire à la mise en oeuvre de l'aspiration et l'encombrement du dispositif de filtration, à prévoir en aval, pour la récupération des poussières).

Pour l'entraînement, vers le bas de la meule de travail, des poussières confinées côté meule d'entraînement, on doit prévoir le transfert desdites poussières, du côté meule d'entraînement vers le côté meule de travail. Lesdites poussières, générées, confinées côté meule d'entraînement peuvent être avantageusement transférées, pour leur entraînement côté meule de travail :
- via au moins un passage prévu dans la réglette d'enfilade, positionnée entre les deux meules de travail et d'entraînement, support de l'objet en cours de rectification. On aspire ainsi les poussières générées côté meule d'entraînement au plus prés de leur site de production. Pour une optimisation de ladite aspiration "de proximité", le passage en question présente un axe incliné du haut vers le bas ; et/ou
- via au moins un passage ménagé sous ladite réglette d'enfilade, au niveau de la partie basse de la meule d'entraînement. On évite ainsi toute accumulation de poussières en ladite partie basse.

De façon particulièrement avantageuse, les poussières générées, confinées côté meule d'entraînement peuvent être transférées, pour leur entraînement côté meule de travail, via un premier passage prévu dans la réglette d'enfilade et via un second passage ménagé sous ladite réglette d'enfilade, au niveau de la partie basse de ladite meule d'entraînement.

Les poussières générées, confinées autour de chacune des deux meules de travail et d'entraînement, rassemblées et entraînées vers le bas de ladite meule de travail, peuvent être prélevées, par aspiration en au moins un point, autour de ladite meule de travail, en aval, bien évidemment de leur point(s) de rassemblement. Avantageusement, elles peuvent être prélevées en un unique point. Très avantageusement, elles peuvent être prélevées, tangentiellement, au point bas de la meule de travail.

Pour une optimisation de ce prélèvement (de cette récupération), un ou plusieurs points (avantageusement en un unique point), l'aspiration peut être mise en oeuvre dans des conditions telles que la vitesse des gaz prélevés est largement supérieure à la vitesse des gaz entraînés, en aval du prélèvement, par la rotation de la meule de travail. La vitesse des gaz aspirés, à l'entrée de la buse d'aspiration intervenant à cette fin (voire de chacune des buses d'aspiration intervenant) peut être dans cet esprit, avantageusement deux à trois fois supérieure à la vitesse périphérique de la meule de travail. On vise ainsi bien sûr à minimiser l'entraînement des poussières par le flux gazeux qui suit, par "effet de peau", la rotation de la meule de travail.

Les gaz chargés en poussières, ainsi prélevés par aspiration, peuvent être ensuite, de façon classique, épurés. On peut notamment les épurer par filtration. Lesdits gaz épurés peuvent être recyclés.

On a vu que le procédé de l'invention peut être mis en oeuvre, comme le procédé de l'art antérieur illustré sur la figure 1, dans un dispositif de protection ouvert, ouvert en référence au confinement dynamique en cause. Dans le cadre d'une variante avantageuse, ledit procédé de l'invention peut être mis en oeuvre au sein d'une boîte à gants.

On a vu également que ledit procédé de l'invention a tout particulièrement été développé dans le cadre de la rectification des pastilles de combustible nucléaire. On rappelle ici qu'il n'est toutefois pas limité à ce cadre. Ledit procédé convient pour la rectification de toutes pièces de révolution cylindriques. Il convient notamment pour la rectification de telles pièces en matériaux durs (céramiques ou métaux, par exemple).

Selon la revendication 9, l'invention concerne un dispositif de rectification d'objets cylindriques. Ledit dispositif comprend au sein d'un dispositif de protection ouvert :
- une meule de travail ;
- une meule d'entraînement ;
- des moyens pour la mise en rotation, à des vitesses convenables, dans le même sens, desdites deux meules de travail et d'entraînement ; sens qui détermine une action de ladite meule de travail sur lesdits objets dirigée du haut vers la bas ;
- une réglette d'enfilade, convenablement disposée entre lesdites deux meules, convenant au support et à la translation desdits objets sur toute la largeur de ladite meule de travail ;
- des moyens pour l'aspiration des poussières de rectification;
- les formes des deux meules de travail et d'entraînement sont épousées au mieux, de sorte que soient seulement maintenus à leur périphérie de minces espaces, pour la circulation du courant gazeux plus ou moins chargé en poussières de rectification ; ceci sur au moins la demi-circonférence, avantageusement sur au moins les trois quarts de la circonférence de chacune desdites deux meules ; ces demi et trois quarts de circonférence étant calculés en allant vers le bas, à partir du niveau supérieur de la réglette d'enfilade ;
- le dispositif de l'invention comprend des moyens pour mettre en communication le mince espace ménagé autour de ladite meule d'entraînement et le mince espace ménagé autour de ladite meule de travail ; lesdits moyens étant localisés dans et/ou sous ladite réglette d'enfilade ; et
- les moyens d'aspiration des poussières sont positionnés pour exercer leur action en au moins un point dudit mince espace entourant ladite meule de travail, en aval, par rapport au sens de rotation de la meule de travail, de l'embouchure desdits moyens de communication.

Au sein d'un tel dispositif, les poussières générées restent confinées au plus près de la surface des meules, sont entraînées et aspirées côté meule de travail.

Le confinement, autour de chacune des deux meules, peut être optimisé, en référence à l'épaisseur du mince espace en cause et à sa longueur sur le pourtour de chacune desdites deux meules. On note toutefois que le dispositif de protection intervenant peut être avantageusement ouvert, dans la zone surplombant la réglette d'enfilade, à des fins de vision et d'alimentation en gaz (gaz que l'on pourrait qualifier de gaz de balayage).

Pour ce qui concerne les moyens de mise en communication des minces espaces ménagés respectivement autour de la meule de travail et de la meule d'entraînement (au moins dans les parties basses desdites deux meules), plusieurs variantes de réalisation existent.

Notamment : la réglette d'enfilade peut comporter au moins un passage ; ledit passage présentant avantageusement un axe incliné du haut vers le bas ; et/ou
le support de ladite réglette d'enfilade peut comporter au moins un passage. Ledit support peut faire partie intégrante du dispositif de protection en cause ou consister en une pièce rapportée, indépendante dudit dispositif de protection mais coopérant évidemment avec celui-ci.

Selon une variante de réalisation préférée, le dispositif de l'invention comporte, pour la mise en communication dudit mince espace autour de la meule d'entraînement et dudit mince espace autour de la meule de travail, un premier passage dans ladite réglette d'enfilade et un second passage sous ladite réglette d'enfilade, dans le support de ladite réglette.

En référence aux moyens d'aspiration des poussières canalisées dans le mince espace autour de la meule de travail, on précise ce qui suit. Ils peuvent consister avantageusement en une unique buse d'aspiration, très avantageusement placée au point bas de la meule de travail.

Le dispositif de l'invention, selon une variante de réalisation, peut être aménagé dans une boîte à gants.

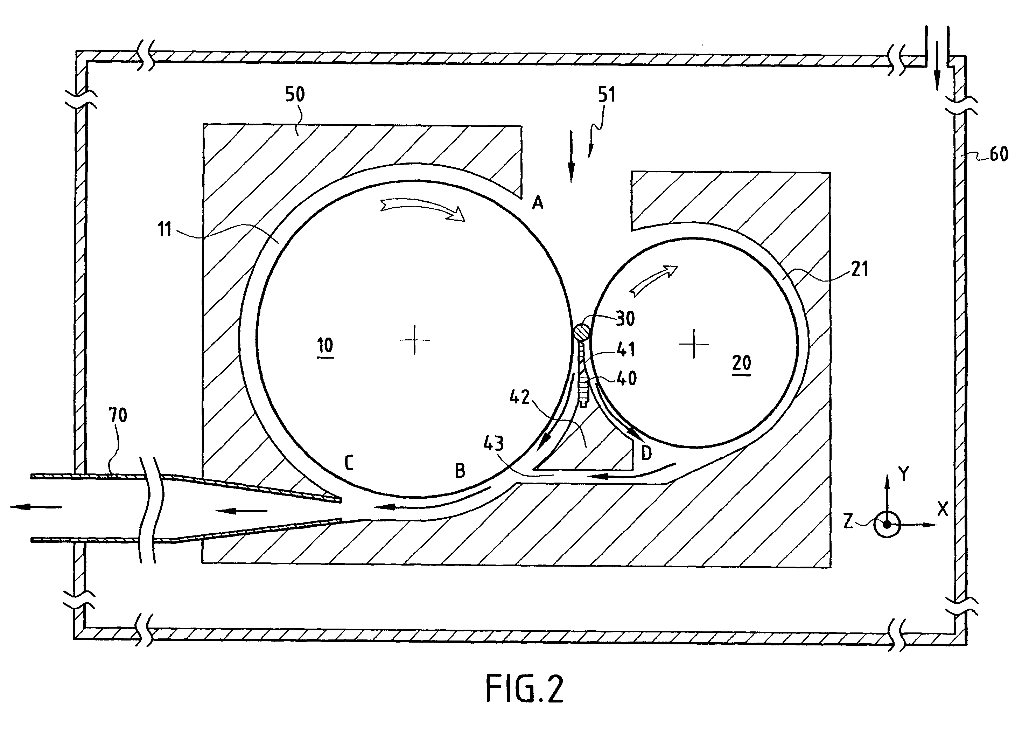

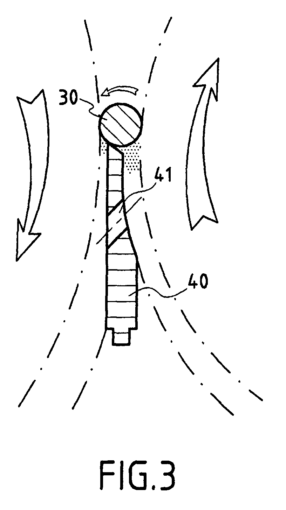

On se propose maintenant de décrire, de façon plus détaillée, l'invention, sous ses aspects procédé et dispositif, en référence aux figures 2 et 3 annexées.

On rappelle que la figure 1 illustre l'art antérieur et a été commentée dans la partie introductive du présent texte.

Sur lesdites figures 2 et 3, on a représenté :
- en 10, la meule de travail,
- en 20, la meule d'entraînement,
- en 30, la pastille en cours de rectification,
- en 40, la réglette d'enfilade sur laquelle progresse ladite pastille 30. Ladite pastille progresse selon l'axe Oz.

Les sens de rotation respectifs desdites meules et pastilles sont indiqués par les flèches blanches. Les meules de travail 10 et d'entraînement 20 tournent dans le même sens (sens horaire sur lesdites figures 2 et 3), qui détermine la direction de l'action abrasive développée par la meule de travail 10 sur la pastille 30, direction du haut vers le bas.

Le dispositif de l'invention est aménagé au sein d'une boîte à gants 60.

De façon caractéristique :
- les deux meules 10 et 20 sont confinées dans un carter 50 qui les enveloppe, au plus près, sur quasi toute leur périphérie. Il est toutefois ménagé en 51 un espace libre. Par cet espace libre 51, arrive le gaz de balayage, schématisé par les flèches noires. Par ledit espace 51, on peut également visionner la rectification en cours. Les espaces 11 et 21, respectivement ménagés autour des meules 10 et 20, sont donc minces ;
- les poussières générées côté meule d'entraînement 20 sont quasi toutes récupérées, via le passage (la lumière) 41 prévu dans la réglette d'enfilade 40 (elles sont ici récupérées immédiatement après leur génération) et celui 43 prévu dans le support 42 de ladite réglette d'enfilade 40 (on évite ainsi toute accumulation de poussières, en D, point bas de la meule d'entraînement 20, poussières entraînées par la rotation de ladite meule d'entraînement 20 et poussières non récupérées au niveau du premier passage 41) et entraînées, côté meule de travail 10, avec les poussières générées côté de ladite meule de travail 10, dans le courant gazeux provoqué d'une part par la rotation de ladite meule de travail 10 et par l'aspiration forcée mise en oeuvre au moyen de la buse d'aspiration 70 ;
- ladite aspiration est donc mise en oeuvre, côté meule de travail 10, au niveau du mince espace 11. Sur la variante avantageuse représentée, elle est mise en oeuvre en un unique point dudit mince espace 11, au point bas (point C) de ladite meule de travail 10. Les plus grosses particules entraînées, soumises au champ d'accélération centrifuge (généré par la rotation de la meule de travail 10), se trouvent concentrées au voisinage de la paroi interne du carter 50 et sont ainsi assurément captées par la buse 70. En B, on a quasi récupéré dans le courant gazeux toutes les poussières générées à la rectification. En C, on aspire quasi toutes lesdites poussières.

La zone C-A est en fait parcourue par deux flux gazeux de sens contraires :
- un flux très mince au contact de la meule de travail 10, entraîné avec elle par "effet de peau", dans le sens de rotation de ladite meule ;
- un flux, occupant la quasi totalité du mince espace 11, provoqué par l'aspiration de la buse 70.

Entre ces deux flux, des turbulences permettent de ramener vers C (et donc vers l'unité de traitement des poussières, située en aval) les particules éventuellement entraînées vers A. Cet effet est obtenu par la combinaison des moyens ci-après que l'homme du métier saura maîtriser :
- localisation exacte et dimensionnement de la buse d'aspiration 70,
- débit d'aspiration de ladite buse 70,
- dimensions des espaces 11 et 21.

La Demanderesse a mis en oeuvre l'invention, au sein d'un dispositif tel que schématisé sur les figures 2 et 3. A titre purement illustratif, elle précise ci-après les principaux paramètres de fonctionnement.

Les pastilles à rectifier, pastilles de PuO₂ + UO₂, présentent les dimensions ci-après :
longueur, généralement comprise entre 10 et 14 mm,
diamètre, généralement compris entre 8 et 11 mm.

Elles doivent, après rectification, présenter un diamètre conforme au cahier des charges.

La meule de travail, d'un diamètre de 350 mm, d'une largeur de 120 mm, tourne à 1500-1600 tours/min tandis que la meule d'entraînement, d'un diamètre de 230 mm, d'une largeur de 120 mm, tourne elle de 40 à 60 tours/min.

Lesdites deux meules sont confinées dans un dispositif de protection type carter 50 qui les enveloppe en laissant de minces espaces libres (environ 6 mm au rayon, épaisseur des espaces 11 et 21 ; environ 1,5 mm d'épaisseur entre lesdites meules et les flasques verticaux dudit dispositif de protection, espaces non représentés sur la figure 2).

Dans de telles conditions, à partir d'un niveau de débit d'aspiration Q d'environ 150 Nm³/h, le flux gazeux entre la meule de travail et son dispositif de protection commence à entraîner vers C les particules restées au contact de ladite meule de travail et le flux d'éjection en A devient pratiquement nul. On a ainsi, en A, aucune éjection de poussières et de ce fait une pollution pratiquement nulle de la boîte à gants, dans laquelle le dispositif de l'invention est aménagé.

Un débit d'aspiration compris entre 150 et 175 Nm³/h (pour une largeur de meule de travail de 120 mm) limite toute rétention de poussières à l'intérieur du dispositif et ne provoque pas d'expulsion desdites poussières hors dudit dispositif, dans la boîte à gants.

Il n'était nullement prévisible de pouvoir obtenir ce bon résultat, de pollution minimisée, voire nulle, de la boîte à gants avec des contraintes raisonnables sur l'aspiration à mettre en oeuvre. La Demanderesse avait initialement pressenti la nécessité de faire intervenir, en aval du point C, une buse de soufflage de gaz, pour refouler vers ledit point C, vers la buse d'aspiration, les particules entraînées au-delà de ladite buse. Or, l'intervention d'une telle buse ne s'est pas révélée nécessaire.

## Revendications

1. Procédé de rectification d'objets cylindriques (3 ; 30), par action abrasive d'une meule de travail (1 ; 10) sur leur surface externe ; lesdits objets (3 ; 30), sous l'action d'une meule d'entraînement (2 ; 20), étant translatés, sur toute la largeur de ladite meule de travail (1 ; 10), en continu, sur une réglette d'enfilade (4 ; 40) positionnée entre lesdites meules de travail (1 ; 10) et d'entraînement (2 ; 20) ; lesdites meules de travail (1 ; 10) et d'entraînement (2 ; 20) étant mises en rotation dans le même sens, sens tel que l'action de ladite meule de travail (1 ; 10) sur lesdits objets (3 ; 30) se développe du haut vers le bas et ledit procédé étant mis en oeuvre dans un dispositif de protection ouvert (5+5' ; 50), avec aspiration des poussières de rectification générées ; **caractérisé en ce qu'**il comprend :
- le confinement statique et dynamique desdites poussières de rectification générées au plus près de la surface desdites meules de travail (10) et d'entraînement (20) ;
- l'entraînement, vers le bas de ladite meule de travail (10), de quasi toutes lesdites poussières générées et confinées côté meule de travail (10) et côté meule d'entraînement (20), dans un courant gazeux, provoqué par la rotation de ladite meule de travail (10) et par la mise en oeuvre d'une aspiration forcée ;
- le prélèvement de la quasi-totalité desdites poussières générées, confinées et entraînées, par ladite aspiration forcée.

2. Procédé selon la revendication 1, **caractérisé en ce que** les poussières générées, confinées côté meule d'entraînement (20) sont transférées, pour leur entraînement, côté meule de travail (10), via au moins un passage (41) prévu dans ladite réglette d'enfilade (40), ledit passage (41) présentant avantageusement un axe incliné du haut vers le bas.

3. Procédé selon l'une des revendications 1 ou 2, **caractérisé en ce que** les poussières générées, confinées côté meule d'entraînement (20) sont transférées, pour leur entraînement, côté meule de travail (10), via au moins un passage (43) ménagé sous ladite réglette d'enfilade (40), au niveau de la partie basse de ladite meule d'entraînement (20).

4. Procédé selon l'une quelconque des revendications 1 à 3, **caractérisé en ce que** les poussières générées, confinées côté meule d'entraînement (20) sont transférées, pour leur entraînement, côté meule de travail (10), via un premier passage (41) prévu dans ladite réglette d'enfilade (40) et via un second passage (43) ménagé sous ladite réglette d'enfilade (40), au niveau de la partie basse de ladite meule d'entraînement (20).

5. Procédé selon l'une quelconque des revendications 1 à 4, **caractérisé en ce que** lesdites poussières générées, confinées et entraînées vers le bas de ladite meule de travail (10) sont prélevées, par aspiration, tangentiellement au point bas de ladite meule de travail (10).

6. Procédé selon l'une quelconque des revendications 1 à 5, **caractérisé en ce que** la vitesse des gaz prélevés par aspiration est largement supérieure à la vitesse des gaz entraînés, en aval dudit prélèvement, par la rotation de ladite meule de travail (10).

7. Procédé selon l'une quelconque des revendications 1 à 6, **caractérisé en ce qu'**il est mis en oeuvre au sein d'une boîte à gants (60).

8. Procédé selon l'une quelconque des revendications 1 à 7, **caractérisé en ce qu'**il est mis en oeuvre pour la rectification de pastilles (30) de combustible nucléaire.

9. Dispositif de rectification d'objets cylindriques (3 ; 30), convenant à la mise en oeuvre du procédé selon l'une quelconque des revendications 1 à 8, comprenant, aménagés dans un dispositif de protection (5+5' ; 50) ouvert :
- une meule de travail (1 ; 10),
- une meule d'entraînement (2; 20),
- des moyens pour la mise en rotation, à des vitesses convenables, dans le même sens, desdites deux meules (1, 2 ; 10, 20), sens choisi pour que l'action de ladite meule de travail (1 ; 10) se développe du haut vers le bas sur lesdits objets (3 ; 30),
- une réglette d'enfilade (4 ; 40), convenablement positionnée entre lesdites deux meules (1, 2 ; 10, 20), convenant au support et à la translation desdits objets (3 ; 30) sur toute la largeur de ladite meule de travail (1 ; 10),
- des moyens (7, 7', 7" ; 70) pour l'aspiration des poussières de rectification ;
ledit dispositif étant **caractérisé en ce que** :
- au sein dudit dispositif de protection (50), les formes desdites meules de travail (10) et d'entraînement (20) sont épousées au mieux, de façon à ce que soient seulement maintenus de minces espaces (11, 21), à leur périphérie, destinés à la circulation du courant gazeux plus ou moins chargé en poussières de rectification ; et ceci, sur au moins la demi-circonférence, avantageusement sur au moins les trois quarts de la circonférence, de chacune desdites deux meules (10, 20) ; ces demi et trois quarts de circonférences étant calculées en allant vers le bas à partir du niveau supérieur de la réglette d'enfilade (40) ;
- il comprend des moyens (41, 43) pour mettre en communication ledit mince espace (21) autour de ladite meule d'entraînement (20) et ledit mince espace (11) autour de ladite meule de travail (10) ; lesdits moyens (41, 43) étant localisés dans et/ou sous ladite réglette d'enfilade (40) ; et **en ce que**
- lesdits moyens d'aspiration (70) des poussières sont positionnés pour exercer leur action en au moins un point dudit mince espace (11) entourant ladite meule de travail (10), en aval, par rapport au sens de rotation de ladite meule de travail (10), de l'embouchure desdits moyens de communication (41, 43).

10. Dispositif selon la revendication 9, **caractérisé en ce que** ledit dispositif de protection (50) est ouvert, dans la zone (51) surplombant ladite réglette d'enfilade (40), à des fins de vision et d'alimentation en gaz.

11. Dispositif selon l'une des revendications 9 ou 10, **caractérisé en ce que** ladite réglette d'enfilade (40) comporte au moins un passage (41), pour la mise en communication dudit mince espace (21) autour de ladite meule d'entraînement (20) et dudit mince espace (11) autour de ladite meule de travail (10) ; ledit passage (41) présentant avantageusement un axe incliné du haut vers le bas.

12. Dispositif selon l'une quelconque des revendications 9 à 11, **caractérisé en ce que** le support (42) de ladite réglette d'enfilade (40), partie dudit dispositif de protection (50) ou pièce rapportée, comporte au moins un passage (43), pour la mise en communication dudit mince espace (21) autour de ladite meule d'entraînement (20) et dudit mince espace (11) autour de ladite meule de travail (10).

13. Dispositif selon l'une quelconque des revendications 9 à 12, **caractérisé en ce qu'**il comporte, pour la mise en communication dudit mince espace (21) autour de la meule d'entraînement (20) et dudit mince espace (11) autour de la meule de travail (10), un premier passage (41) dans ladite réglette d'enfilade (40) et un second passage (43) sous ladite réglette d'enfilade, dans le support (42) de ladite réglette (40).

14. Dispositif selon l'une quelconque des revendications 9 à 13, **caractérisé en ce que** lesdits moyens d'aspiration (70) consistent en une unique buse d'aspiration.

15. Dispositif selon la revendication 14, **caractérisé en ce que** ladite buse d'aspiration (70) est placée tangentiellement au point bas de ladite meule de travail (10).

16. Dispositif selon l'une quelconque des revendications 9 à 15, **caractérisé en ce qu'**il est agencé dans une boîte à gants (60).

## Claims

1. A method of rectifying cylindrical articles (3; 30) by abrasive action of a working grind wheel (1; 10) on the outside surface of each article; said articles (3; 30) being moved continuously in translation by the action of a driving grind wheel (2; 20) along the entire width of said working grind wheel (1; 10) along an alignment strip (4; 40) positioned between said working grind wheel (1; 10) and said driving grind wheel (2; 20); said working and driving grind wheels (1; 10-2; 20) being rotated in the same direction, which direction is such that the action of said working grind wheel (1; 10) on said articles (3; 30) acts downwards, the method being implemented in an open protection device (5+5'; 50) with the rectification dust that is generated being sucked away; the method being **characterized in that** it comprises:
- statically and dynamically confining the generated rectification dust very close to the surfaces of said working and driving grind wheels (10-20);
- entraining practically all of said generated dust as confined beside the working grind wheel (10) and beside the driving grind wheel (20) towards the bottom of said working grind wheel (10) in a flow of gas set up by said working grind wheel (10) rotating and by implementing forced suction; and
- taking away practically all of said generated, confined, and entrained dust via said forced suction.

2. The method according to claim 1, **characterized in that** the dust that is generated and confined beside the driving grind wheel (20) is transferred for entrainment beside the working grind wheel (10) via at least one passage (41) provided through said alignment strip (40), said passage (41) advantageously having an axis that slopes downwards.

3. The method according to claim 1 or claim 2, **characterized in that** the dust that is generated and confined beside the driving grind wheel (20) is transferred for entrainment to beside the working grind wheel (10) via at least one passage (43) provided beneath said alignment strip (40) level with the bottom portion of said driving grind wheel (20).

4. The method according to any one of claims 1 to 3, **characterized in that** said dust that is generated and confined beside the driving grind wheel (20) is transferred for entrainment purposes to beside the working grind wheel (10) via a first passage (41) provided through said alignment strip (40) and via a second passage (43) provided beneath said alignment strip (40) level with the bottom portion of said driving grind wheel (20).

5. The method according to any one of claims 1 to 4, **characterized in that** said dust that is generated, confined, and entrained towards the bottom of said working grind wheel (10), is sucked away tangentially from the bottom point of said working grind wheel (10).

6. The method according to any one of claims 1 to 5, **characterized in that** the speed of the gas that is sucked away is much faster than the speed of the gas that is entrained beyond said suction by the rotation of said working grind wheel (10).

7. The method according to any one of claims 1 to 6, **characterized in that** it is implemented within a glove box (60).

8. The method according to any one of claims 1 to 7, **characterized in that** it is implemented to rectify pellets (30) of nuclear fuel.

9. Apparatus for rectifying cylindrical articles (3; 30), the apparatus being suitable for implementing the method according to any one of claims 1 to 8, and comprising, within an open protection device (5+5'; 50) :
- a working grind wheel (1; 10);
- a driving grind wheel (2; 20);
- means for setting both of said grind wheels (1, 2; 10, 20) into rotation at suitable speeds in the same direction, which direction is selected so that the action of said working grind wheel (1; 10) acts downwards on said articles (3; 30);
- an alignment strip (4; 40) suitably positioned between said two grind wheels (1, 2; 10, 20), suitable for supporting said articles (3; 30) and moving them in translation along the entire width of said working grind wheel (1; 10); and
- means (7, 7', 7"; 70) for sucking away the rectification dust;
said apparatus being **characterized in that**:
- within said protection device (50) the shapes of said working and driving grind wheels (10, 20) are followed as closely as possible so that only narrow spaces (11, 21) are maintained around their peripheries for passing a flow of gas more or less heavily leaden with rectification dust; with this taking place over at least half the circumference and advantageously over at least three-fourths of the circumference of each of said two grind wheels (10, 20); said half and three-fourths circumferences being measured going downwards from the top of the alignment strip (40);
- it includes means (41, 43) for putting said narrow space (21) around said driving grind wheel (20) into communication with said narrow space (11) around said working grind wheel (10); said means (41, 43) being located through and/or beneath said alignment strip (40); and
- said dust suction means (70) are positioned to act at at least one point of said narrow space (11) surrounding said working grind wheel (10), downstream in the direction of rotation of said working grind wheel (10) from the outlet of said means (41, 43) for putting said spaces into communication.

10. The apparatus according to claim 9, **characterized in that** said protection device (50) is open in a zone (51) overlying said alignment strip (40) for the purposes of observation and feeding gas.

11. The apparatus according to claim 9 or claim 10, **characterized in that** said alignment strip (40) has at least one passage (41) for putting said narrow space (21) around said driving grind wheel (20) into communication with said narrow space (11) around said working grind wheel (10); said passage (41) advantageously presenting an axis that slopes downwards.

12. The apparatus according to any one of claims 9 to 11, **characterized in that** the support (42) for said alignment strip (40), forming a portion of said protection device (50) or constituting a piece that is fitted thereto, has at least one passage (43) for putting said narrow space (21) around said driving grind wheel (20) into communication with said narrow space (11) around said working grind wheel (10).

13. The apparatus according to any one of claims 9 to 12, **characterized in that**, for putting said narrow space (21) around the driving grind wheel (20) into communication with said narrow space (11) around the working grind wheel (10), it has a first passage (41) through said alignment strip (40) and a second passage (43) beneath said alignment strip through the support (42) of said alignment strip (40).

14. The apparatus according to any one of claims 9 to 13, **characterized in that** said suction means (70) are constituted by a single suction nozzle.

15. The apparatus according to claim 14, **characterized in that** said suction nozzle (70) is placed tangentially to the bottom point of said working grind wheel (10).

16. The apparatus according to any one of claims 9 to 15, **characterized in that** it is disposed within a glove box (60).

## Patentansprüche

1. Verfahren zum Schleifen von zylindrischen Gegenständen (3; 30) durch schleifende Einwirkung einer Schleifscheibe (1; 10) auf deren äußere Oberfläche; wobei die Gegenstände (3; 30) unter der Einwirkung einer Führungsscheibe (2; 20) über die gesamte Breite der Schleifscheibe (1; 10) kontinuierlich bewegt werden auf einer Aneinanderreihungsleiste (4; 40), welche zwischen der Schleifscheibe (1; 10) und der Führungsscheibe (2; 20) angeordnet ist; wobei die Schleifscheibe (1; 10) und die Führungsscheibe (2; 20) in der gleichen Richtung rotiert werden, und zwar in einer solchen Richtung, dass die Einwirkung der Schleifscheibe (1; 10) auf die Gegenstände (3; 30) von oben nach unten erfolgt, und wobei das Verfahren in einer offenen Schutzvorrichtung (5+5'; 50) mit Ansaugung der erzeugten Schleifstäube ausgeführt wird; **dadurch gekennzeichnet, dass** es umfasst:
- das statische und dynamische Einschließen der erzeugten Schleifstäube in der unmittelbaren Nähe der Oberfläche der Schleifscheibe (10) und der Führungsscheibe (20);
- das Mitschleppen von praktisch allen erzeugten und seitens der Schleifscheibe (10) und seitens der Führungsscheibe (20) eingeschlossenen Stäuben in Richtung der Unterseite der Schleifscheibe (10) in einem gasförmigen Strom, hervorgerufen durch die Rotation der Schleifscheibe (10) und durch das Ausführen einer Zwangsansaugung;
- die Entnahme von praktisch der Gesamtheit der erzeugten, eingeschlossenen und mitgeschleppten Stäube durch die Zwangsansaugung.

2. Verfahren nach Anspruch 1, **dadurch gekennzeichnet, dass** die erzeugten, seitens der Führungsscheibe (20) eingeschlossenen Stäube für deren Mitschleppen, von Seiten der Schleifscheibe (10), über wenigstens einen Durchgang (41), welcher in der Aneinanderreihungsleiste (40) vorgesehen ist, transferiert werden, wobei der Durchgang (41) vorteilhafterweise eine von oben nach unten geneigte Achse aufweist.

3. Verfahren nach einem der Ansprüche 1 oder 2, **dadurch gekennzeichnet, dass** die erzeugten, seitens der Führungsscheibe (20) eingeschlossenen Stäube für deren Mitschleppen, von Seiten der Schleifscheibe (10), über wenigstens einen Durchgang (43), welcher unter der Aneinanderreihungsleiste (40) auf der Höhe der Unterseite der Führungsscheibe (20) angeordnet ist, transferiert werden.

4. Verfahren nach einem der Ansprüche 1 bis 3, **dadurch gekennzeichnet, dass** die erzeugten, seitens der Führungsscheibe (20) eingeschlossenen Stäube für deren Mitschleppen, von Seiten der Schleifscheibe (10), über einen ersten Durchgang (41), welcher in der Aneinanderreihungsleiste (40) vorgesehen ist, und über einen zweiten Durchgang (43), welcher unter der Aneinanderreihungsleiste (40) auf der Höhe der Unterseite der Führungsscheibe (20) angeordnet ist, transferiert werden.

5. Verfahren nach einem der Ansprüche 1 bis 4, **dadurch gekennzeichnet, dass** die erzeugten, eingeschlossenen und in Richtung der Unterseite der Schleifscheibe (10) mitgeschleppten Stäube durch Ansaugung tangential an dem Tiefpunkt der Schleifscheibe (10) entnommen werden.

6. Verfahren nach einem der Ansprüche 1 bis 5, **dadurch gekennzeichnet, dass** die Geschwindigkeit der durch Ansaugung entnommenen Gase deutlich höher ist als die Geschwindigkeit der mitgeschleppten Gase stromabwärts von der Entnahme, durch die Rotation der Schleifscheibe (10).

7. Verfahren nach einem der Ansprüche 1 bis 6, **dadurch gekennzeichnet, dass** es innerhalb eines Kastens mit Handschuhfunktion (60) ausgeführt wird.

8. Verfahren nach einem der Ansprüche 1 bis 7, **dadurch gekennzeichnet, dass** es für das Schleifen von Pellets (30) aus Kernbrennstoff ausgeführt wird.

9. Vorrichtung zum Schleifen von zylindrischen Gegenständen (3; 30), welche für das Ausführen des Verfahrens nach einem der Ansprüche 1 bis 8 geeignet ist, umfassend, angeordnet in einer offenen Schutzvorrichtung (5+5'; 50):
- eine Schleifscheibe (1; 10),
- eine Führungsscheibe (2; 20),
- Mittel zum Rotieren der beiden Scheiben (1, 2; 10, 20) mit geeigneten Geschwindigkeiten in der gleichen Richtung, wobei die Richtung so ausgewählt wird, dass die Einwirkung der Schleifscheibe (1; 10) auf die Gegenstände (3; 30) von oben nach unten erfolgt,
- eine Aneinanderreihungsleiste (4; 40), welche zwischen den beiden Scheiben (1, 2; 10, 20) geeignet angeordnet ist, welche für das Tragen und die Bewegung der Gegenstände (3; 30) über die gesamte Breite der Schleifscheibe (1; 10) geeignet ist,
- Mittel (7, 7', 7"; 70) für das Ansaugen der Schleifstäube;
wobei die Vorrichtung **dadurch gekennzeichnet ist, dass**:
- sich diese innerhalb der Schutzvorrichtung (50) maximal an die Schleifscheibe (10) und die Führungsscheibe (20) derart anschmiegt, dass nur schmale Räume (11, 21) an deren Peripherie, welche für die Zirkulation des mehr oder weniger mit Schleifstäuben beladenen gasförmigen Stroms bestimmt sind, beibehalten werden; und dies auf wenigstens dem halben Umfang, vorteilhafterweise auf wenigstens drei Vierteln des Umfangs von jeder der beiden Scheiben (10, 20); wobei diese halben und dreiviertel Umfänge so berechnet sind, dass sie ausgehend von dem oberen Niveau der Aneinanderreihungsleiste (40) nach unten laufen;
- sie Mittel (41, 43) umfasst, um den schmalen Raum (21) um die Führungsscheibe (20) herum und den schmalen Raum (11) und den schmalen Raum um die Schleifscheibe (10) herum miteinander zu verbinden; wobei die Mittel (41, 43) in und/oder unter der Aneinanderreihungsleiste (40) lokalisiert sind; und dass
- die Ansaugmittel (70) der Stäube so positioniert sind, dass sie ihre Wirkung an wenigstens einem Punkt des schmalen Raums (11), welcher die Schleifscheibe (10) umgibt, stromabwärts, bezogen auf die Rotationsrichtung der Schleifscheibe (10), von der Mündung der Verbindungsmittel (41, 43) ausüben.

10. Vorrichtung nach Anspruch 9, **dadurch gekennzeichnet, dass** die Schutzvorrichtung (50) in dem Bereich (51), welcher sich über der Aneinanderreihungsleiste (40) erstreckt, zu Sichtzwecken und zu Zwecken einer Versorgung mit Gas offen ist.

11. Vorrichtung nach einem der Ansprüche 9 oder 10, **dadurch gekennzeichnet, dass** die Aneinanderreihungsleiste (40) wenigstens einen Durchgang (41) für die Verbindung des schmalen Raums (21) um die Führungsscheibe (20) herum und des schmalen Raums (11) um die Schleifscheibe (10) herum umfasst, wobei der Durchgang (41) vorteilhafterweise eine von oben nach unten geneigte Achse aufweist.

12. Vorrichtung nach einem der Ansprüche 9 bis 11, **dadurch gekennzeichnet, dass** der Träger (42) der Aneinanderreihungsleiste (40), welcher ein Teil der Schutzvorrichtung (50) oder ein aufgesetztes Teil ist, wenigstens einen Durchgang (43) für die Verbindung des schmalen Raums (21) um die Führungsscheibe (20) herum und des schmalen Raums (11) um die Schleifscheibe (10) herum umfasst.

13. Vorrichtung nach einem der Ansprüche 9 bis 12, **dadurch gekennzeichnet, dass** sie für die Verbindung des schmalen Raums (21) um die Führungsscheibe (20) herum und des schmalen Raums (11) um die Schleifscheibe (10) herum einen ersten Durchgang (41) in der Aneinanderreihungsleiste (40) und einen zweiten Durchgang (43) unter der Aneinanderreihungsleiste in dem Träger (42) der Leiste (40) umfasst.

14. Vorrichtung nach einem der Ansprüche 9 bis 13, **dadurch gekennzeichnet, dass** die Ansaugmittel (70) aus einer einzigen Ansaugdüse bestehen.

15. Vorrichtung nach Anspruch 14, **dadurch gekennzeichnet, dass** die Ansaugdüse (70) tangential an dem Tiefpunkt der Schleifscheibe (10) angeordnet ist.

16. Vorrichtung nach einem der Ansprüche 9 bis 15, **dadurch gekennzeichnet, dass** sie in einem Kasten mit Handschuhfunktion (60) angeordnet ist.
